(19) Europäisches Patentamt
European Patent Office
Office européen des brevets

(11) **EP 2 920 741 B1**

(12) **EUROPÄISCHE PATENTSCHRIFT**

(45) Veröffentlichungstag und Bekanntmachung des Hinweises auf die Patenterteilung:
**20.12.2017 Patentblatt 2017/51**

(21) Anmeldenummer: **13821792.2**

(22) Anmeldetag: **22.10.2013**

(51) Int Cl.:
**B64D 45/04** (2006.01)

(86) Internationale Anmeldenummer:
**PCT/DE2013/100362**

(87) Internationale Veröffentlichungsnummer:
**WO 2014/075657 (22.05.2014 Gazette 2014/21)**

(54) **VERFAHREN UND VORRICHTUNG ZUR BILDGESTÜTZTEN LANDEBAHNLOKALISIERUNG**

METHOD AND DEVICE FOR IMAGE-ASSISTED RUNWAY LOCALIZATION

PROCÉDÉ ET DISPOSITIF DE LOCALISATION D'UNE PISTE D'ATTERRISSAGE ASSISTÉE PAR IMAGERIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.11.2012 DE 102012111010**

(43) Veröffentlichungstag der Anmeldung:
**23.09.2015 Patentblatt 2015/39**

(73) Patentinhaber: **Airbus Defence and Space GmbH 85521 Ottobrunn (DE)**

(72) Erfinder: **SCHERTLER, Klaus 85748 Garching (DE)**

(74) Vertreter: **Isarpatent Patent- und Rechtsanwälte Behnisch Barth Charles Hassa Peckmann & Partner mbB Friedrichstrasse 31 80801 München (DE)**

(56) Entgegenhaltungen:
• YLAE-LAEAESKI A ET AL: "GROUPING SYMMETRICAL STRUCTURES FOR OBJECT SEGMENTATION AND DESCRIPTION", COMPUTER VISION AND IMAGE UNDERSTANDING, ACADEMIC PRESS, US, Bd. 63, Nr. 3, 1. Mai 1996 (1996-05-01), Seiten 399-417, XP000597548, ISSN: 1077-3142, DOI: 10.1006/CVIU.1996.0031
• REGENSBURGER U ET AL: "VISUAL REGOGNITION OF OBNSTACLES ON ROADS", PROCEEDINGS OF THE IEEE/RSJ/GI INTERNATIONAL CONFERENCE ON INTELLIGENT ROBOTS AND SYSTEMS: ADVANCED ROBOTICS AND THE REAL WORLD. MUNICH, SEPT. 12 - 16, 1994; [PROCEEDINGS OF THE INTERNATIONAL CONFERENCE ON INTELLIGENT ROBOTS AND SYSTEMS (IROS)], NEW, Bd. 2, 12. September 1994 (1994-09-12), Seiten 980-987, XP000514603, ISBN: 978-0-7803-1934-9
• DICMANNS E D: "Bifocal vision for mobile robot control", INDUSTRIAL ELECTRONICS, 1993. CONFERENCE PROCEEDINGS, ISIE'93 - BUDAPE ST., IEEE INTERNATIONAL SYMPOSIUM ON BUDAPEST, HUNGARY 1-3 JUNE 1993, NEW YORK, NY, USA,IEEE, US, 1. Juni 1993 (1993-06-01), Seiten 243-248, XP010068647, DOI: 10.1109/ISIE.1993.268800 ISBN: 978-0-7803-1227-2
• GONG X ET AL: "A survey of techniques for detection and tracking of airport runways", COLLECTION OF TECHNICAL PAPERS - 44TH AIAA AEROSPACE SCIENCES MEETING COLLECTION OF TECHNICAL PAPERS - 44TH AIAA AEROSPACE SCIENCES MEETING 2006 AMERICAN INSTITUTE OF AERONAUTICS AND ASTRONAUTICS INC. US,, Bd. 23, Nr. 44TH, 9. Januar 2006 (2006-01-09), Seiten 17289-17302, XP002526940, in der Anmeldung erwähnt

- Anonymous: "how to speed up my image processing algorithm... - Ars Technica OpenForum", , 8 June 2003 (2003-06-08), XP055376742, Retrieved from the Internet: URL:https://arstechnica.com/civis/viewtopic.php?f=20&t=673698 [retrieved on 2017-05-29]

**EP 2 920 741 B1**

**Beschreibung**

Die Erfindung betrifft ein Verfahren und eine Vorrichtung zur Landebahnlokalisierung auf der Grundlage einer Merkmalsanalyse mindestens eines von einem landenden Luftfahrzeug aufgenommenen Bildes der Landebahnumgebung.

Zur Lokalisierung von Landebahnen in Bildern werden üblicherweise merkmalsbasierte Verfahren (feature-based methods) oder musterbasierte Verfahren (template-based methods) der Bildverarbeitung verwendet vgl. X. Gong, A.L. Abbott, "A Survey of Techniques for Detection and Tracking of Airport Runways", 44th AIAA Aerospace Sciences Meeting and Exhibit, 9-12 January 2006, Reno, Nevada. Bei diesen Verfahren werden Merkmale und Muster der spezifischen visuellen Komponenten der Landebahnen und ggf. deren Umgebungen wie Randmerkmale, Randmarkierungen, Mittellinien, Schwellen, Landebahnkennungen, Landebahnbefeuerungen oder Zielpunktmarkierungen als Modellwissen in Merkmals- und Musterdatenbanken hinterlegt. Durch Merkmalsvergleich (feature matching) oder Mustervergleich (template matching) der im Kamerabild enthaltenen Merkmale oder Muster mit dem in der Datenbank hinterlegten Modellwissen kann eine resultierende Gesamtlage der Landebahn im Bild bestimmt werden. Weitere Verfahren zur Erkennung von Strukturen sind aus Ylä-Lääski et al., "Grouping symmetrical structures for object segmentation and description", Computer Vision and Image Understanding, 1996, bekannt. Eine paarweise Verknüpfung von Pixeln ist offenbart in Regensburger et al. "Visual recognition of obstacles on roads". Eine Robotersteuerung findet sich in Dicmanns, "Bifocal vision for mobile robot control", Industrial Electronics, 1993.

Beispielsweise werden im Bereich der merkmalsbasierten Verfahren häufig die an Landebahnen dominanten Linienmerkmale der Landebahnmarkierungen unter Nutzung von sogenannten Hough-Transformationen extrahiert und verwendet. Die extrahierten Linienmerkmale werden dann mit dem in der Datenbank hinterlegtem Modellwissen zur Lage von Landebahnbegrenzungen, Mittellinien oder Kanten von Schwellen verglichen und eine Gesamtlage der Landebahn im Bild bestimmt.

Bekannte merkmals- und musterbasierte Verfahren, die auf der Erkennung und Lokalisierung spezifischer visueller Komponenten der Landebahn basieren, besitzen allerdings verschiedene technische Nachteile. Zum einen ist die Durchführung des beschriebenen Merkmals- und Mustervergleichs mit einem hohen Berechnungsaufwand im Luftfahrzeug verbunden. Der hohe Berechnungsaufwand ist insbesondere vor dem Hintergrund der hohen Anforderungen an luftfahrtgeeignete Berechnungshardware zu sehen. Diese Anforderungen schränken die im Luftfahrzeug verfügbare Rechnungsleistung - im Vergleich zu der Rechenleistung kommerzieller Berechnungshardware - stark ein. Darüber hinaus ergeben sich weitere Nachteile aus der notwendigen Verwendung von spezifischem Modellwissen. Die Erkennung spezifischer visueller Komponenten der Landebahn erfordert ein im Luftfahrzeug verfügbares z.B. in Datenbanken hinterlegtes Modellwissen über die an verschiedenen Landebahnen unter verschiedenen Bedingungen zu erwartenden visuellen Komponenten. Dieses Modellwissen umfasst die spezifischen Erscheinungsformen der Komponenten z.B. Formen und Farben und deren relativen Lagen zueinander. Das Modellwissen ist kontinuierlich auf dessen Gültigkeit zu überprüfen und ggf. anzupassen. Dies ist auch ohne aktive bauliche Veränderungen an den Landebahnen notwendig. Beispielsweise werden durch Reifenabrieb im Bereich der Aufsetzpunkte von Landebahnen die Mittellinien im Laufe der Zeit mehr und mehr überdeckt. Die gegenwärtige Sichtbarkeit einzelner Komponente muss daher im Modellwissen aktuell erfasst sein. Da das zu verwendende Modellwissen zudem umgebungsabhängig tageszeit- und witterungsabhängig ist, muss in jedem Landeanflug eine Selektion des gegenwärtig zu verwendenden Modellwissens durchgeführt werden. Beispielsweise sind in der Nacht oder in der Dämmerung Modelle zu verwenden, welche die visuellen Merkmale der Landebahnbefeuerung berücksichtigen. Diese sind gegebenenfalls aber auch am Tag zu verwenden, falls beispielsweise durch Schneefall weiße Markierungen nicht verlässlich erkannt werden können.

Trotz einer umgebungsabhängigen Selektion des Modellwissens können zusätzliche schwer erfassbare Variationen in den Erscheinungsformen der visuellen Komponenten auftreten z.B. durch Regen, Nebel oder Bewölkungsschatten. Diese visuellen Variationen können die Genauigkeit und Verlässlichkeit der Verfahren stark beeinflussen.

Daher erfordern herkömmliche Verfahren, welche auf der Erkennung und Lokalisierung spezifischer visueller Komponenten der Landebahn basieren, eine aufwändige und kostenintensive Erstellung, Pflege, Verfügbarmachung und Selektion von Modellwissen im Luftfahrzeug. Landeanflüge an Landebahnen für die kein Modellwissen verfügbar ist, können nicht bildgestützt durchgeführt werden. Nicht zu vermeidende Variationen der Erscheinungsformen der visuellen Komponenten können die Genauigkeit und Verlässlichkeit der Verfahren stark negativ beeinflussen. Zudem sind die bekannten Verfahren mit einem hohen Bedarf an Rechenleistung verbunden, dessen Bereitstellung insbesondere im Luftfahrzeug mit einem erhöhten technischen Aufwand verbunden ist.

Hiervon ausgehend liegt der Erfindung die Aufgabe zugrunde, eine Ermittelung der Lage einer Landebahn aufgrund eines Bildes bei geringem Berechnungsaufwand auch dann zu ermöglichen, wenn ein Modellwissen über spezifische visuelle Komponenten der Landebahn oder deren Umgebung nicht zur Verfügung steht.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung, sowie der Erläuterung von Ausführungsbeispielen der Erfindung, die in den Figuren dargestellt sind.

Erfindungsgemäß wird die Aufgabe dadurch gelöst, dass zur Ermittlung der Landebahnmittelachse im Kamerabild ein Merkmalsvergleich von Bildmerkmalen des Bildes mit gespiegelten Bildmerkmalen des Bildes durchgeführt wird, wobei Merkmale der einen Landebahnseite mit Merkmalen der jeweils anderen Landebahnseite in Deckung gebracht werden und wobei die maximale Ähnlichkeit der beiden Bilder erreicht wird, wenn die Spiegelachse, als Landebahnmittelachse in der Landebahnmitte liegt.

Die erfindungsgemäße Lösung besteht in der Nutzung der Eigenschaft, dass nahezu alle dominanten visuellen Komponenten der Landebahn (Randmarkierungen, Mittellinien, Schwellen, Landebahnbefeuerungen oder Zielpunktmarkierungen) spiegelsymmetrisch zur Landebahnmitte angeordnet sind. Anstelle die im Bild vor-Die erfindungsgemäße Lösung besteht in der Nutzung der Eigenschaft, dass nahezu alle dominanten visuellen Komponenten der Landebahn (Randmarkierungen, Mittellinien, Schwellen, Landebahnbefeuerungen oder Zielpunktmarkierungen) spiegelsymmetrisch zur Landebahnmitte angeordnet sind. Anstelle die im Bild vorhandenen visuellen Komponenten durch Merkmalsoder Mustervergleich mit den in einer Datenbank hinterlegten Merkmalen oder Mustern zu lokalisieren, wird erfindungsgemäß ein Merkmalsvergleich zwischen den Bildmerkmalen und deren gespiegelten Versionen durchgeführt. Damit werden beispielsweise gespiegelte visuelle Merkmale von Komponenten der linken Landebahnhälfte dazu verwendet, um diese mit den entsprechenden Komponenten der rechten Landebahnhälfte in Deckung zu bringen - und umgekehrt. Die maximale Ähnlichkeit im Merkmalsvergleich wird erreicht, wenn die zur Spiegelung der Bildmerkmale verwendete Spiegelachse in der Lan-debahnmitte liegt - womit letztlich die Lage der Landebahn bestimmt ist. Da visuelle Variationen im Bild z.B. Beleuchtungsveränderungen oder Nebel im Allgemeinen nicht dominant auf einer der beiden Landebahnhälften auftreten, ist die Lage der Spiegelachse - und damit die Lage der Landebahn - sehr robust gegenüber visuellen Variationen.

Erfindungsgemäß wird das Bild in ein horizontal ausgerichtetes Bild überführt, vorzugsweise durch Bestimmung der Lage des Horizonts aus dem Kamerabild oder aus der Sensorik des Luftfahrzeugs.

Erfindungsgemäß wird vom Bild oder dem horizontal ausgerichteten Bild jeweils ein Merkmalsbild und ein gespiegeltes Merkmalsbild durch eine Merkmalsextraktion erzeugt.

Erfindungsgemäß erfolgt die Merkmalsextraktion durch Ermittlung der horizontalen Kantenstärke im Bild. Die Ermittlung der Kantenstärke als Merkmal ist insbesondere durch betragsmäßig starke Kanten an den Rändern der Landebahnmarkierungen besonders vorteilhaft.

Erfindungsgemäß erfolgt die Ermittlung der horizontalen Kantenstärke im Bild mittels Konvolution des jeweiligen Bildes mit einer horizontalen Filtermaske der Form [-1, 0, 1] und anschließender Bildung des Betrags der Filterantwort. Eine derartige Ermittlung der Kantenstärke ist vorteilhaft mit einem geringen Berechnungsaufwand und daher kurzen Berechnungszeiten verbunden.

Erfindungsgemäß wird zur Erzeugung eines Merkmalsvergleichsbildes eine Korrelation zwischen einzelnen in dem Merkmalsbild des Bildes und dem gespiegelten Merkmalsbild des Bildes entsprechenden Zeilen gebildet.

Erfindungsgemäß erfolgt die Korrelation gemäß folgender Beziehung:

$$V(k) = IFFT(\ FFT(M1(k)) * CONJ(FFT(M2(k)))\ ),$$

mit

FFT: schnelle Fourier-Transformation;
IFFT: inverse schnelle Fourier-Transformation
M1: Merkmalsbild
M2: gespiegeltes Merkmalsbild
M1(k) und M2(k): die k-ten Zeilen der Merkmalsbilder
CONJ: komplexe Konjugation.

$V(k)$ enthält einen maximalen Korrelationswert an der Position, um die eine Spiegelung der Merkmale eine maximale Ähnlichkeit mit den ungespiegelten Merkmalen besitzt.

Erfindungsgemäß wird die Korrelation für eine Untermenge von Zeilen durchgeführt. Wenn die Berechnung nur mit einer Untermenge von Zeilen, beispielsweise nur jeder zweiten oder jeder dritten Zeile durchgeführt wird, verringert sich der Rechenaufwand und damit der Zeitbedarf bis das Ergebnis zur Verfügung steht. Gemäß noch einer vorteilhaften Weiterbildung der Erfindung werden in jeder berechneten Zeile des Merkmalsvergleichsbildes eine oder mehrere horizontale Bildpositionen von lokalen Korrelations-Maximalwerten bestimmt, welche die Bildposition des globalen Zeilenmaximum beinhaltet, und diese Bildpositionen werden als Lagehypothesen durch eine Gerade approximiert, welches die Landebahnmittelachse darstellt.

Dabei wird vorzugsweise diejenige Gerade als Landebahnmittelachse bestimmt, die durch eine maximale Gesamtzahl von Lagehypothesen bestätigt wird.

Vorzugsweise wird dabei die ermittelte Landebahnmittelachse in das ursprüngliche (nicht horizontal ausgerichtete) Bild zurückgerechnet zur Ausgabe der tatsächlichen Landebahnmittelachse im aufgenommenen Bild.

Die Aufgabe wird ferner gelöst durch eine Vorrichtung zur Landebahnlokalisierung auf der Grundlage einer Merkmalsanalyse mindestens eines von einem landenden Luftfahrzeug aufgenommenen Bildes der Landebahnumgebung, dadurch gekennzeichnet, umfassend

- eine Kameraeinheit zur Aufnahme von Bildern einer Landebahn;
- eine Bildausrichtungseinheit zur Erzeugung eines horizontal ausgerichteten Kamerabildes;
- eine Merkmalsextraktionseinheit zur Erzeugung eines Merkmalsbildes und eines gespiegelten Merkmalsbildes vom Bild;
- eine Symmetrieachsenbestimmungseinheit, die auf der Grundlage der Merkmalsbilder ein Merkmalsvergleichsbild erzeugt;
- eine Geradenbestimmungseinheit, die aus dem Merkmalsvergleichsbild die Landebahnmittelachse bestimmt.

Dabei ist vorzugsweise die Merkmalsextraktionseinheit für die Bestimmung von horizontalen Kantenstärken durch Konvolution des Bildes mit einer horizontalen Filtermaske der Form [-1, 0, 1] und anschließender Bildung des Betrags der Filterantwort ausgebildet.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand der Erfindung und können insbesondere zusätzlich auch Gegenstand einer oder mehrerer separater Anmeldung/en sein. Gleiche, ähnliche und/oder funktionsgleiche Teile sind mit gleichen Bezugszeichen versehen.

Es zeigen:

Figur 1:     einen Systemüberblick;
Figur 2:     die Wirkungsweise der Ausrichtungseinheit;
Figur 3:     die Wirkungsweise der Merkmalsextraktionseinheit;
Figur 4:     zwei durch die Ausführungsform der Merkmalsextraktionseinheit gewonnene Merkmalsbilder einer Landebahn bei Tag;
Figur 5:     zwei durch die Ausführungsform der Merkmalsextraktionseinheit gewonnene Merkmalsbilder einer Landebahn bei Nacht;
Figur 6:     die Wirkungsweise der Symmetrieachsenbestimmungseinheit;
Figur 7:     ein Ergebnis der Symmetrieachsenbestimmungseinheit in Form des Merkmalsvergleichsbildes der Landebahn bei Tag aus Figur 4;
Figur 8:     ein Ergebnis der Symmetrieachsenbestimmungseinheit in Form des Merkmalsvergleichsbildes der Landebahn bei Nacht aus Figur 5;
Figur 9:     die Wirkungsweise der Geradenbestimmungseinheit;
Figur 10:    das Ergebnis der Geradenbestimmungseinheit bei dem Bild gemäß Figur 4;
Figur 11:    das Ergebnis der Geradenbestimmungseinheit bei dem Bild gemäß Figur 5.

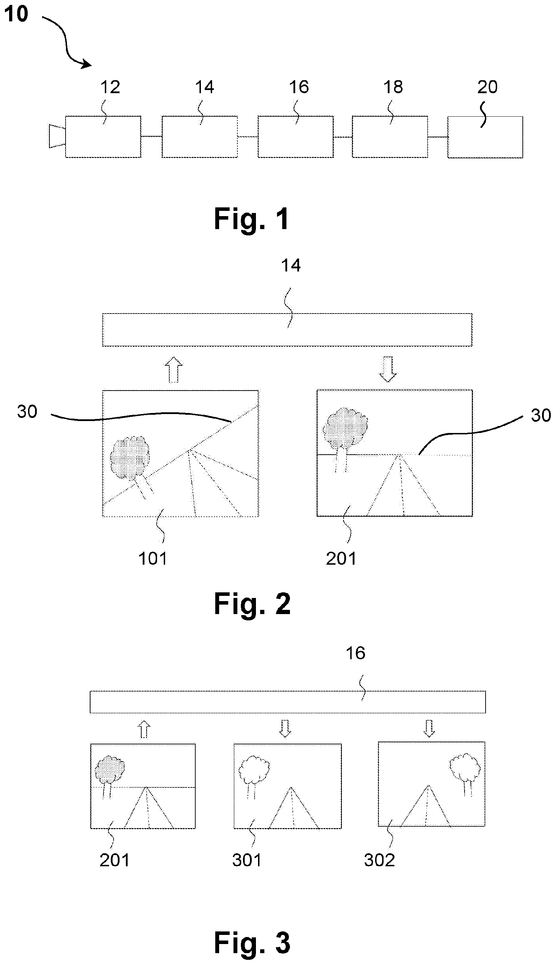

Figur 1 zeigt einen Systemüberblick der erfindungsgemäßen Vorrichtung 10 umfassend eine Kameraeinheit 12, eine Ausrichtungseinheit 14, eine Merkmalextraktionseinheit 16, eine Symmetrieachsenbestimmungseinheit 18 und eine Geradenbestimmungseinheit 20.

Figur 2 zeigt die Wirkungsweise der Ausrichtungseinheit 14. Das Kamerabild 101 wird in ein horizontal ausgerichtetes Kamerabild 201 überführt. Die Ausrichtungseinheit 14 überführt durch Drehung des Kamerabildes 101 dieses in ein horizontal ausgerichtetes Kamerabild 201. Die Information über den dazu notwendigen Drehwinkel ist dabei entweder der Sensorik des Luftfahrzeuges zu entnehmen oder alternativ aus dem Kamerabild 101 selbst zu gewinnen, z.B. durch Bestimmung der Lage des Horizonts 30. Das ausgerichtete Kamerabild 201 wird der in Figur 3 behandelten Merkmalsextraktionseinheit 16 zugeführt.

Figur 3 illustriert die Wirkungsweise der Merkmalsextraktionseinheit 16. In dieser Einheit wird das ausgerichtete Kamerabild 201 in ein Merkmalsbild 301 und ein gespiegeltes Merkmalsbild 302 überführt. Das zweite Merkmalsbild 302 enthält dabei die horizontal gespiegelten Merkmale des Merkmalsbildes 301.

Eine Ausführungsform der Merkmalsextraktion ist durch die Bestimmung des Betrags der horizontalen Kantenstärke gegeben. Die Gewinnung des Merkmalsbildes 301 erfolgt dabei durch Konvolution des Kamerabildes mit einer horizontalen Kanten-Filtermaske der Form [-1, 0, 1] und anschließender Bildung des Betrags der Filterantwort. Ein derartiges Verfahren ist in R.C. Gonzales, R.E. Woods, "Digital Image Processing", Prentice Hall International, 2007 beschrieben. Das Ergebnis der Betragsbildung ergibt das Merkmalsbild 301. Ein gespiegeltes Merkmalsbild 302 wird durch horizontale Spiegelung des Merkmalsbildes 301 an dessen Bildmitte gewonnen siehe Figur 3. Die Spiegelung entspricht einer Umkehrung der Reihenfolge der Spalten im Merkmalsbild.

Die Merkmalsbilder 301 und 302 werden der Symmetrieachsenbestimmungseinheit 18 zugeführt.

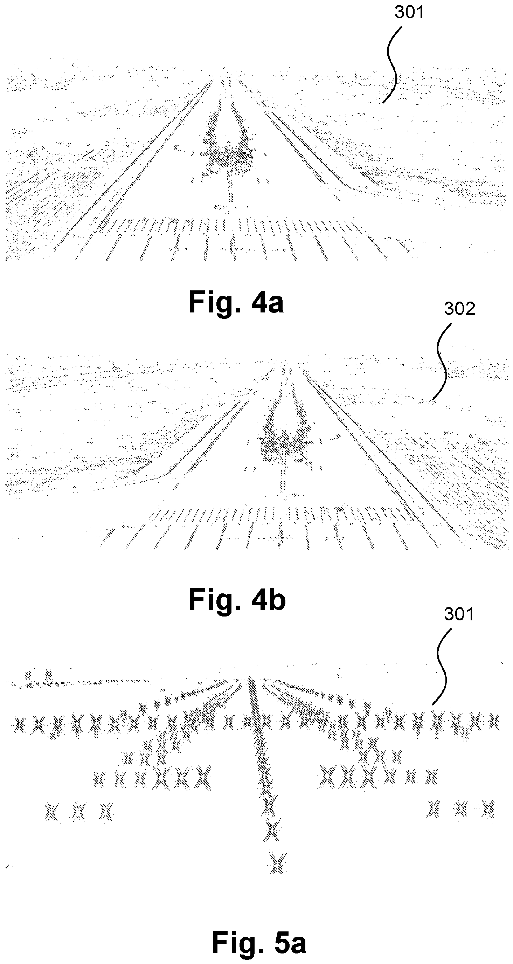

Figur 4 zeigt durch die Ausführungsform der Merkmalsextraktionseinheit 16 gewonnene Merkmalsbilder 301 und 302 einer Landebahn bei Tag. Im mittleren Bereich der Bilder sind die Mittellinien der Landebahn durch Reifenabrieb überdeckt.

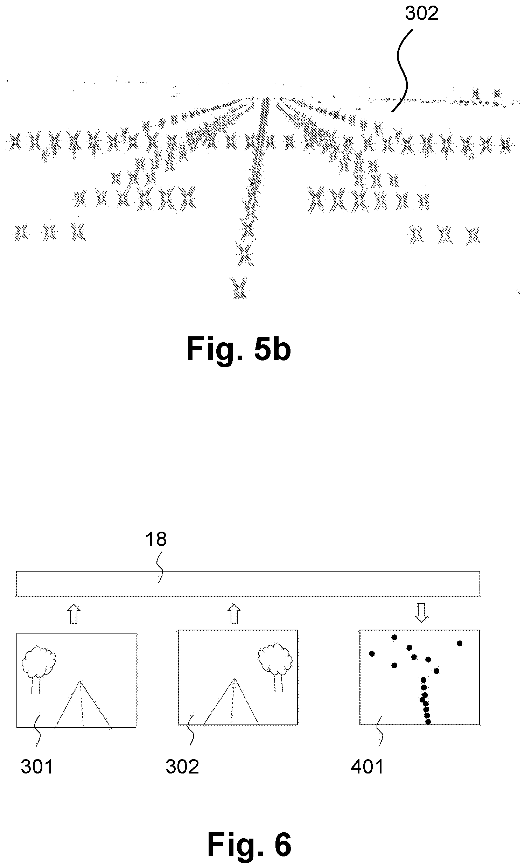

Figur 5 zeigt durch die Ausführungsform der Merkmalsextraktionseinheit 16 gewonnene Merkmalsbilder 301 und 302 einer Landebahn bei Nacht. Die kreuzförmigen Strukturen entstehen durch die Lichtquellen der Landebahnbefeuerung.

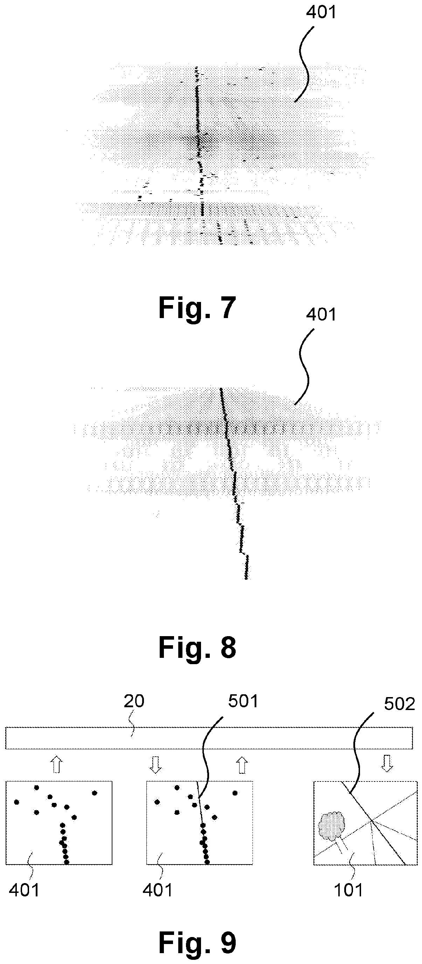

Figur 6 illustriert die Wirkungsweise der Symmetrieachsenbestimmungseinheit 18. In dieser Einheit werden zeilenweise Korrelationen zwischen sich entsprechenden Zeilen der Merkmalsbilder 301 und 302 zur Erzeugung eines Merkmalsvergleichsbildes 401 gebildet. Die Maxima im Merkmalsvergleichsbild entsprechen den Positionen maximaler horizontaler Spiegelsymmetrie im Merkmalsbild 301, siehe Figur 7.

Eine Ausführungsform der Bestimmung der k-ten Zeile V(k) des Merkmalsvergleichsbildes V ist durch den folgenden Ausdruck zur Berechnung der Korrelation im Frequenzraum gegeben vgl. obige Zitatstelle Gonzales et.al.:

$$V(k) = IFFT( \; FFT(M1(k)) * CONJ(FFT(M2(k))) \; )$$

Hierin sind M1 (k) und M2(k) die k-ten Zeilen der Merkmalsbilder 301 und 302. Die schnelle Fourier-Transformation ist durch das Symbol FFT und deren inverse Transformation durch das Symbol IFFT gegeben. CONJ stellt die komplexe Konjugation dar.

V(k) enthält einen maximalen Korrelationswert an der Position, um die eine Spiegelung der Merkmale eine maximale Ähnlichkeit mit den ungespiegelten Merkmalen besitzt.

Figur 7 zeigt ein Ergebnis der Symmetrieachsenbestimmungseinheit 18 in Form des Merkmalsvergleichsbildes 401 der Landebahn bei Tag aus Figur 4. Zeilen-Maxima im Merkmalsvergleichsbild sind als dickere schwarze Punkte markiert.

Figur 8 zeigt ein Ergebnis der Symmetrieachsenbestimmungseinheit 18 in Form des Merkmalsvergleichsbildes 401 der Landebahn bei Nacht aus Figur 5. Zeilen-Maxima im Merkmalsvergleichsbild sind als dickere schwarze Punkte markiert.

V(k) enthält einen maximalen Korrelationswert an der Position, um die eine Spiegelung der Merkmale eine maximale Ähnlichkeit mit den ungespiegelten Merkmalen besitzt.

Figur 7 zeigt ein Ergebnis der Symmetrieachsenbestimmungseinheit 18 in Form des Merkmalsvergleichsbildes 401 der Landebahn bei Tag aus Figur 4. Zeilen-Maxima im Merkmalsvergleichsbild sind als dickere schwarze Punkte markiert.

Figur 8 zeigt ein Ergebnis der Symmetrieachsenbestimmungseinheit 18 in Form des Merkmalsvergleichsbildes 401 der Landebahn bei Nacht aus Figur 5. Zeilen-Maxima im Merkmalsvergleichsbild sind als dickere schwarze Punkte markiert.

Das Merkmalsvergleichsbild wird nur auf einer geeignet gewählten Untermenge von Zeilen in diskreten Zeilensprüngen berechnet.

Das Merkmalsvergleichsbild 401 wird der Geradenbestimmungseinheit 20 zugeführt. Figur 9 illustriert die Wirkungsweise der Geradenbestimmungseinheit 20. In dieser Einheit wird die dominante Gerade 501 entlang der Maxima des Merkmalsvergleichsbildes 401 bestimmt. Die Gerade 501 entspricht der Lage der Landebahn im ausgerichteten Kamerabild 201. Durch Invertierung der in der Ausrichtungseinheit 14 durchgeführten Rotation wird die Gerade 501 in die Gerade 502 überführt. Diese entspricht der Lage der Landebahn im Kamerabild 101.

Insbesondere wird in der Geradenbestimmungseinheit 20 jeder berechneten Zeile k des Merkmalsvergleichsbildes 401, die horizontale Bildposition des Maximalwertes bestimmt siehe Figuren 7 und 8. Die Lagen der so erhaltenen Korrelationsmaxima werden als Hypothesen für die Lage der Landebahnmitte im ausgerichteten Kamerabild 201 interpretiert. Die Aufgabe der Geradenbestimmungseinheit 20 ist es nun eine Gerade 501 durch die Positionen der Korrelationsmaxima zu legen und deren Geradenparameter zu bestimmen. Siehe Figur 9.

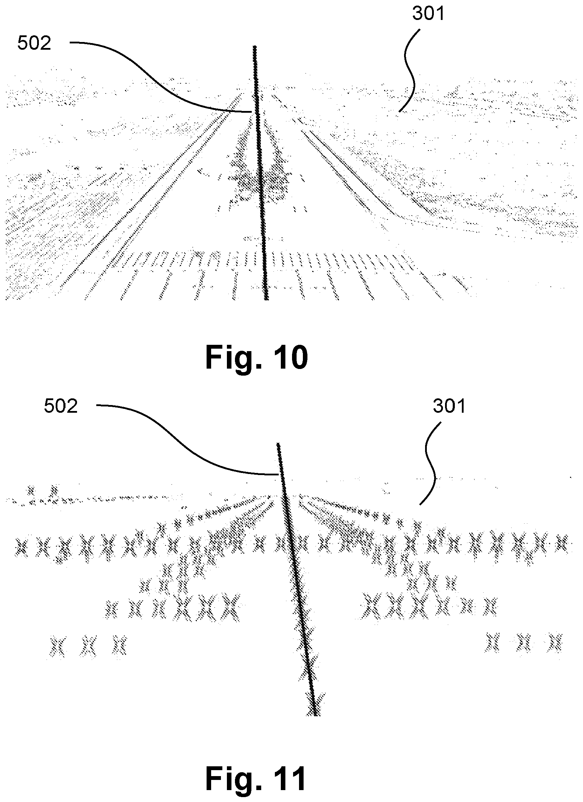

Figur 10 zeigt das Ergebnis der Geradenbestimmungseinheit 20. Die Gerade 502 entspricht der Lage der Landebahn bei Tag aus Figur 4.

Figur 11 zeigt das Ergebnis der Geradenbestimmungseinheit 20. Die Gerade 502 entspricht der Lage der Landebahn bei Nacht aus Figur 5.

Eine alternative Ausführungsform der Geradenbestimmungseinheit 20 verwendet mehrere lokale Maximalwerte pro Zeile des Merkmalsvergleichsbildes 401 als Lagehypothesen.

**Patentansprüche**

1. Verfahren zur Landebahnlokalisierung auf der Grundlage einer Merkmalsanalyse mindestens eines von einem landenden Luftfahrzeug aufgenommenen Bildes (101) der Landebahnumgebung, **dadurch gekennzeichnet, dass** zur Ermittlung der Landebahnmittelachse (502) ein Merkmalsvergleich von Bildmerkmalen (301) des Bildes (101) mit gespiegelten Bildmerkmalen (302) des Bildes (101) durchgeführt wird, dabei Merkmale der einen Landebahnseite mit Merkmalen der anderen Landebahnseite in Deckung gebracht werden, und die maximale Ähnlichkeit der beiden Merkmalsbilder (301, 302) erreicht wird, wenn die Spiegelachse als Landebahnmittelachse (502) in der Landebahnmitte liegt, wobei das Bild (101) vor Bestimmung der Merkmalsbilder (301, 302) in ein horizontal ausgerichtetes Bild (201) überführt wird, vom Bild (101) oder dem horizontal ausgerichteten Bild (201) jeweils ein Merkmalsbild (301) und ein gespiegeltes Merkmalsbild (302) durch eine Merkmalsextraktion erzeugt wird, die Merkmalsextraktion durch Ermittlung der horizontalen Kantenstärke im Bild (101) oder dem horizontal ausgerichteten Bild (201) erfolgt, die Bestimmung der horizontalen Kantenstärke mittels Konvolution des jeweiligen Bildes mit einer horizontalen Filtermaske der Form [-1, 0, 1] und anschließender Bildung des Betrags der Filterantwort erfolgt, wobei zur Erzeugung eines Merkmalsvergleichsbildes (401) eine Korrelation zwischen einzelnen in dem Merkmalsbild (301) des Bildes (101) und dem gespiegelten Merkmalsbild (302) des Bildes (101) entsprechenden Zeilen gebildet wird, wobei die Korrelation nur für eine geeignet gewählte Untermenge von Zeilen in diskreten Zeilensprüngen gebildet wird, und wobei die Korrelation gemäß folgender Beziehung erfolgt:

$$V(k) = IFFT( FFT(M1(k)) * CONJ(FFT(M2(k))) ),$$

mit

FFT: schnelle Fourier-Transformation;
IFFT: inverse schnelle Fourier-Transformation
M1: Merkmalsbild
M2: gespiegeltes Merkmalsbild
M1(k) und M2(k): die k-ten Zeilen der Merkmalsbilder
CONJ: komplexe Konjugation.

2. Verfahren nach Anspruch 1, **dadurch gekennzeichnet, dass** in jeder berechneten Zeile des Merkmalsvergleichsbildes (401) eine oder mehrere horizontale Bildpositionen von lokalen Korrelations-Maximalwerten bestimmt werden, welche die Bildposition des globalen Zeilenmaximum beinhaltet, und diese Bildpositionen als Lagehypothesen durch eine Gerade approximiert werden, welches die Landebahnmittelachse (501) darstellt.

3. Verfahren nach Anspruch 2, **dadurch gekennzeichnet, dass** diejenige Gerade als Landebahnmittelachse (501) bestimmt wird, die durch eine maximale Gesamtzahl von Lagehypothesen bestätigt wird.

4. Verfahren nach Anspruch 2 oder 3, **dadurch gekennzeichnet, dass** die errechnete Landebahnmittelachse (501) in das ursprüngliche Bild zurückgerechnet wird zur Ausgabe der tatsächlichen Landebahnmittelachse (502) im aufgenommenen Bild (101).

5. Vorrichtung zur Landebahnlokalisierung auf der Grundlage einer Merkmalsanalyse mindestens eines von einem landenden Luftfahrzeug aufgenommenen Bildes der Landebahnumgebung, **dadurch gekennzeichnet**, umfassend

- eine Kameraeinheit (12) zur Aufnahme mindestens eines Bildes (101) einer Landebahn;
- eine Bildausrichtungseinheit (14) zur Erzeugung eines horizontal ausgerichteten Bildes (201) aus dem Bild (101);
- eine Merkmalsextraktionseinheit (16) zur Erzeugung eines Merkmalsbildes (301) und eines gespiegelten Merkmalsbildes (302) aus dem horizontal ausgerichteten Bild (201), wobei die Erzeugung durch Ermittlung der horizontalen Kantenstärke in dem horizontal ausgerichteten Bild (201) erfolgt, und wobei die Merkmalsextraktionseinheit (16) für die Bestimmung von horizontalen Kantenstärken durch Konvolution der Bilder mit einer horizontalen Filtermaske der Form [-1, 0, 1] und anschließender Bildung des Betrags der Filterantwort ausgebildet ist;
- eine Symmetrieachsenbestimmungseinheit (18), die auf der Grundlage der Merkmalsbilder (301, 302) ein Merkmalsvergleichsbild (401) erzeugt, wobei Merkmale der einen Landebahnseite mit Merkmalen der anderen Landebahnseite in Deckung gebracht werden, und die maximale Ähnlichkeit der beiden Merkmalsbilder (301, 302) erreicht wird, wenn die Spiegelachse als Landebahnmittelachse (502) in der Landebahnmitte liegt, und wobei die Symmetrieachsenbestimmungseinheit (18) zur Erzeugung des Merkmalsvergleichsbildes (401) eine Korrelation zwischen einzelnen in dem Merkmalsbild (301) des Bildes (101) und dem gespiegelten Merkmalsbild (302) des Bildes (101) entsprechenden Zeilen bildet, wobei die Korrelation nur für eine geeignet gewählte Untermenge von Zeilen in diskreten Zeilensprüngen gebildet wird;
- eine Geradenbestimmungseinheit (20), die aus dem Merkmalsvergleichsbild (401) die Landebahnmittelachse (501, 502) bestimmt,

wobei die Symmetrieachsenbestimmungseinheit die Korrelation gemäß folgender Beziehung bildet:

$$V(k) = IFFT(\ FFT(M1(k))\ *\ CONJ(FFT(M2(k)))\ ),$$

mit

FFT: schnelle Fourier-Transformation;
IFFT: inverse schnelle Fourier-Transformation
M1: Merkmalsbild
M2: gespiegeltes Merkmalsbild
M1(k) und M2(k): die k-ten Zeilen der Merkmalsbilder
CONJ: komplexe Konjugation.

6. Verwendung der Vorrichtung nach Anspruch 5 in einem Luftfahrzeug.

7. Verwendung des Verfahrens nach einem der Ansprüche 1 bis 4 in einem Luftfahrzeug.

**Claims**

1. Method for landing strip location on the basis of feature analysis of at least one image (101) of the landing strip vicinity captured by a landing aircraft, **characterised in that** to determine the central landing strip axis (502) a feature comparison of image features (301) of the image (101) with reflected image features (302) of the image (101) is carried out, features of one landing strip side are brought into coincidence with features of the other landing strip side, and the maximum similarity of the two feature images (301, 302) is achieved when the mirror axis is positioned in the centre of the landing strip as the central landing strip axis (502), before the feature images (301, 302) are determined the image (101) being converted into a horizontally orientated image (201), a feature image (301) and a reflected feature image (302) each being generated from the image (101) or the horizontally orientated image (201), the feature extraction taking place by determining the horizontal edge thickness in the image (101) or the horizontally orientated image (201), the horizontal edge thickness being determined by convoluting the image in question using a horizontal filter mask of the form [-1, 0, 1] and subsequently taking the magnitude of the filter output, a correlation between individual lines corresponding in the feature image (301) of the image (101) and in the reflected feature image (302) of the image (101) being found so as to generate a feature comparison image (401), the correlation being found only for a suitably selected subset of lines in discrete line skips, and the correlation being based on the following relationship:

$$V(k)\ =\ IFFT(FFT(M1(k))\ *\ CONJ(FFT(M2(k)))),$$

where

FFT: fast Fourier transform;
IFFT: inverse fast Fourier transform;
M1: feature image;
M2: reflected feature image;
M1(k) and M2(k): the kth lines of the feature images;
CONJ: complex conjugate.

**2.** Method according to claim 1, **characterised in that** in each calculated line of the feature comparison image (401) one or more horizontal image positions of local correlation maxima are determined, which include the image position of the global line maximum, and these image positions as hypothetical locations are approximated by a straight line representing the central landing strip axis (501).

**3.** Method according to claim 2, **characterised in that** the straight line confirmed by a maximum total number of hypothetical locations is determined as the central landing strip axis (501).

**4.** Method according to either claim 2 or claim 3, **characterised in that** the computed central landing strip axis (501) is transferred back into the original image so as to output the actual central landing strip axis (502) in the captured image (101).

**5.** Device for landing strip location on the basis of feature analysis of at least one picture (10) of the landing strip vicinity captured by a landing aircraft, **characterised in that** it comprises

- a camera unit (12) for capturing at least one image (101) of a landing strip;
- an image orientation unit (14) for generating a horizontally orientated image (201) from the image (101)
- a feature extraction unit (16) for generating a feature image (301) and a reflected feature image (302) from the horizontally orientated image (201), the generation being carried out by determining the horizontal edge thickness in the horizontally orientated image (201), and the feature extraction unit (16) being configured to determine horizontal edge thicknesses by convoluting the images using a horizontal filter mask of the form [-1, 0, 1] and subsequently taking the magnitude of the filter output;
- an axis of symmetry determination unit (18), which generates a feature comparison image (401) on the basis of the feature images (301, 302), features of one landing strip side being brought into coincidence with features of the other landing strip side, and the maximum similarity of the two feature images (301, 302) being achieved when the mirror axis is positioned in the centre of the landing strip as the central landing strip axis (502), and the axis of symmetry determination unit (18) finding a correlation between individual lines corresponding in the feature image (301) of the image (101) and in the reflected feature image (302) of the image (101) so as to generate a feature comparison image (401), the correlation being found only for a suitably selected subset of lines in discrete line skips;
- a straight line determination unit (20), which determines the central landing strip axis (501, 502) from the feature comparison image (401),

the axis of symmetry determination unit finding the correlation using the following relationship:

$$V(k) = IFFT(FFT(M1(k)) * CONJ(FFT(M2(k)))),$$

where

FFT: fast Fourier transform;
IFFT: inverse fast Fourier transform;
M1: feature image;
M2: reflected feature image;
M1(k) and M2(k): the $k^{th}$ lines of the feature images;
CONJ: complex conjugate.

**6.** Use of the device according to claim 5 in an aircraft.

**7.** Use of the method according to any of claims 1 to 4 in an aircraft.

**Revendications**

**1.** Procédé de localisation de piste d'atterrissage sur la base d'une analyse de caractéristiques d'au moins une image (101) des environs de la piste d'atterrissage, prise par un avion atterrissant, **caractérisé en ce que** pour détecter l'axe médian de piste d'atterrissage (502), une comparaison de caractéristiques d'image (301) de l'image (101) avec des caractéristiques d'image réfléchies (302) de l'image (101) est réalisée, des caractéristiques d'un côté de la piste d'atterrissage étant mises en concordance avec des caractéristiques de l'autre côté de la piste d'atterrissage et la similitude maximale des deux images de caractéristiques (301, 302) étant atteinte lorsque l'axe de symétrie, en tant qu'axe médian de piste d'atterrissage (502), est situé au milieu de la piste d'atterrissage, dans lequel l'image (101), avant la détermination des images de caractéristiques (301, 302), est transformée en une image (201) orientée horizontalement, dans lequel une image de caractéristiques (301) et une image de caractéristiques réfléchie (302) sont respectivement générées à partir de l'image (101) ou de l'image (201) orientée horizontalement au moyen d'une extraction de caractéristiques, dans lequel l'extraction de caractéristiques est réalisée par détection de l'épaisseur d'arête horizontale dans l'image (101) ou dans l'image (201) orientée horizontalement, dans lequel la détermination de l'épaisseur d'arête horizontale est réalisée par convolution de l'image respective avec un masque de filtre horizontal de la forme [-1, 0, 1] et par formation subséquente du montant de la réponse de filtre, dans lequel, pour générer une image comparative de caractéristiques (401), une corrélation entre des lignes individuelles correspondantes dans l'image de caractéristiques (301) de l'image (101) et dans l'image de caractéristiques réfléchie (302) de l'image (101) est formée, la corrélation étant formée seulement pour un sous-ensemble de lignes discrètement entrelacées, sélectionné de manière appropriée, et la corrélation étant réalisée selon la relation suivante :

$$V(k) = IFFT( FFT(M1(k)) * CONJ(FFT(M2(k))) ),$$

où l'on a

FFT : transformation de Fourier rapide ;
IFFT : transformation de Fourier rapide inverse
M1 : image de caractéristiques
M2 : image de caractéristiques réfléchie
M1 (k) et M2(k) : les énièmes lignes k des images de caractéristiques
CONJ : conjugaison complexe.

2. Procédé selon la revendication 1, **caractérisé en ce que** dans chaque ligne calculée de l'image comparative de caractéristiques (401), une ou plusieurs positions d'image horizontales de valeurs maximales locales de corrélation sont déterminées, lesquelles contiennent la position d'image du maximum de lignes global, et **en ce que** ces positions d'image sont approximées par une droite en tant qu'hypothèses de position, laquelle représente l'axe médian de piste d'atterrissage (501).

3. Procédé selon la revendication 2, **caractérisé en ce que** la droite, laquelle est confirmée par un nombre total maximal d'hypothèses de position, est déterminée en tant qu'axe médian de piste d'atterrissage (501).

4. Procédé selon la revendication 2 ou 3, **caractérisé en ce que** l'axe médian calculé de piste d'atterrissage (501) est reconverti en l'image initiale pour la sortie de l'axe médian réel de piste d'atterrissage (502) dans l'image (101) prise.

5. Dispositif de localisation de piste d'atterrissage sur la base d'une analyse de caractéristiques d'au moins une image (101) des environs de la piste d'atterrissage, prise par un avion atterrissant, **caractérisé en ce qu'**il comprend :

- une unité de caméra (12) pour la prise d'au moins une image (101) d'une piste d'atterrissage ;
- une unité d'orientation d'image (14) destinée à générer, à partir de l'image (101), une image (201) orientée horizontalement ;
- une unité d'extraction de caractéristiques (16) destinée à générer une image de caractéristiques (301) et une image de caractéristiques réfléchie (302) à partir de l'image (201) orientée horizontalement, dans lequel dispositif la génération est réalisée par détection de l'épaisseur d'arête horizontale dans l'image (201) orientée horizontalement, et dans lequel l'unité d'extraction de caractéristiques (16) est réalisée pour la détermination d'épaisseurs d'arête horizontales par convolution des images avec un masque de filtre horizontal de la forme [-1, 0, 1] et pour la formation subséquente du montant de la réponse de filtre ;
- une unité de détermination d'axe de symétrie (18) qui génère une image comparative de caractéristiques (401) sur la base des images de caractéristiques (301, 302), dans lequel des caractéristiques d'un côté de piste d'atterrissage est mis en concordance avec des caractéristiques de l'autre côté de piste d'atterrissage, et dans lequel la similitude maximale des deux images de caractéristiques (301, 302) est atteinte lorsque l'axe de symétrie, en tant qu'axe médian de piste d'atterrissage (502), est situé au milieu de la piste d'atterrissage, et dans lequel

l'unité de détermination d'axe de symétrie (18), pour générer l'image comparative de caractéristiques (401), forme une corrélation entre des lignes individuelles correspondantes dans l'image de caractéristiques (301) de l'image (101) et dans l'image de caractéristiques réfléchie (302) de l'image (101), la corrélation étant formée seulement pour un sous-ensemble de lignes discrètement entrelacées, sélectionné de manière appropriée,

- une unité de détermination de droite (20) qui détermine l'axe médian de piste d'atterrissage (501, 502) à partir de l'image comparative de caractéristiques (401), dans lequel l'unité de détermination d'axe de symétrie forme la corrélation selon la relation suivante :

$$V(k) = IFFT(\ FFT(M1(k))\ *\ CONJ(FFT(M2(k)))\ ),$$

où l'on a

FFT : transformation de Fourier rapide ;
IFFT : transformation de Fourier rapide inverse
M1 : image de caractéristiques
M2 : image de caractéristiques réfléchie
M1 (k) et M2(k) : les énièmes lignes k des images de caractéristiques
CONJ : conjugaison complexe.

6. Utilisation du dispositif selon la revendication 5 dans un avion.

7. Application du procédé selon l'une quelconque des revendications 1 à 4 dans un avion.

**10**

| 12 | 14 | 16 | 18 | 20 |

**Fig. 1**

14

30 — 101

30 — 201

**Fig. 2**

16

201 301 302

**Fig. 3**

**Fig. 4a**

**Fig. 4b**

**Fig. 5a**

302

**Fig. 5b**

18

301 302 401

**Fig. 6**

401

**Fig. 7**

401

**Fig. 8**

20          501          502

401          401          101

**Fig. 9**

**Fig. 10**

**Fig. 11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **VGL. X. GONG.** A Survey of Techniques for Detection and Tracking of Airport Runways. *44th AIAA Aerospace Sciences Meeting and Exhibit,* 09. Januar 2006
- **YLÄ-LÄÄSKI et al.** Grouping symmetrical structures for object segmentation and description. *Computer Vision and Image Understanding,* 1996

- **REGENSBURGER et al.** Visual recognition of obstacles on roads". Eine Robotersteuerung findet sich in Dicmanns, ''Bifocal vision for mobile robot control. *Industrial Electronics,* 1993